# EUROPÄISCHE PATENTSCHRIFT

(11) **EP 1 688 000 B1**
(45) Veröffentlichungstag und Bekanntmachung des Hinweises auf die Patenterteilung: **22.07.2009**
(21) Anmeldenummer: 04818395.8
(22) Anmeldetag: 10.11.2004
(51) Int. Cl.: H04W 4/12

(54) **VERFAHREN ZUR STEUERUNG DER ZUSTELLUNG VON NACHRICHTEN IN EINEM TELEKOMMUNIKATIONSNETZ UNTER BESONDERER BERÜCKSICHTIGUNG DER MEHRGERÄTEKONFIGURATIONEN**
METHOD FOR CONTROLLING THE DELIVERY OF MESSAGES IN A TELECOMMUNICATIONS NETWORK WHILE TAKING MULTI-DEVICE CONFIGURATIONS INTO SPECIAL CONSIDERATION
PROCEDE DE COMMANDE DE LA DISTRIBUTION DE MESSAGES DANS UN RESEAU DE TELECOMMUNICATION EN TENANT PARTICULIEREMENT COMPTE DES CONFIGURATIONS A PLUSIEURS TERMINAUX

(30) Priorität: 11.11.2003 DE 10352949; 17.02.2004 DE 102004007856
(43) Veröffentlichungstag der Anmeldung: 09.08.2006
(73) Patentinhaber: T-Mobile Deutschland GmbH, 53227 Bonn (DE)
(72) Erfinder: DENNERT, Thomas, 53844 Troisdorf (DE); GÖTZ, Günter, 97204 Höchberg (DE)
(74) Vertreter: Riebling, Peter
(86) Internationale Anmeldenummer: PCT/EP2004/012852
(87) Internationale Veröffentlichungsnummer: WO 2005/048622

(56) Entgegenhaltungen:
- EP-A- 0 711 090
- EP-A- 0 899 974
- WO-A-94/17644
- DE-A1- 10 054 379

## Beschreibung

Die Erfindung betrifft ein Verfahren zur Steuerung der Zustellung von Nachrichten in einem Telekommunikationsnetz, insbesondere in Mobilkommunikationsnetzen...

Mit dem Wort "Nachrichten" sind in diesem Dokument auch folgende weiteren Begriffe zu verstehen:
- Nachrichten mit angereicherter Informationen (z.B. Bilder),
- Kurznachrichten,
- E-Mails
- Paging von Kommunikationsteilnehmern unter besonderer Berücksichtigung der Mehrgerätekonfigurationen

### Hintergrund und Problemstellung

In Mobilfunknetzen werden heute verschiedene Verfahren bereitgestellt, um einem Teilnehmer die Nutzung mehrerer Endgeräte zu erlauben (so genannte Twin-Card, Multi-Card Produkte) . Das Endgerät wird in bekannter Weise durch Verwendung eines Identifikations-Chips oder Teilnehmeridentitätsmoduls, z.B. SIM-Karte, aktiviert und personalisiert.
Dieses Produktszenario ergibt sich z.B. aus der parallelen Nutzung von z.B. mobilem Endgerät, Autotelefon und Organiser. Hierbei ist jeweils ein oder sogar gleichzeitig mehrere Endgeräte unter einer einheitlichen Nummer aktiviert.

Bei Ansätzen mit mehreren gleichzeitig aktiven Endgeräten werden die unter einer einheitlichen Nummer erfolgende ankommenden Paging Versuche dediziert zu dem jeweilig aktiven Endgerät des Teilnehmers signalisiert.

Die WO 94/17644 A1 beschreibt das Paging mehrerer mobiler Endgeräte eines Teilnehmers unter der einheitlichen Rufnummer, wobei im Falle eines eingehenden Anrufs alle Endgeräte des Teilnehmers simultan gepagt werden. Die EP 0 711 090 A2 offenbart das eingangserwähnte Mulit-card Produkt, bei dem sich mehrere SIMs eine IMSI teilen.

Nachteile existierender Verfahren, die spezielle Paging Nummern pro Endgerät nutzen, resultieren aus dem Entstehen von "Schatten" Nummern. Hieraus ergibt sich:
- Es ergeben sich für den Teilnehmer zusätzliche "Schatten" Nummern pro Endgerät
- Nummer ist per Paging erreichbar jedoch nicht per Anwahl

Nachteile existierender Verfahren, die nur ein aktives Endgerät zur zustellung erlauben, resultieren aus den eingeschränkten Nutzungsmöglichkeiten für den Teilnehmer. Hieraus ergibt sich:
- Bei Geräte gebundener Zustellung kann Zustellung leicht an falsches Gerät erfolgen
- Keine parallele Nutzung von Geräten möglich, nur ein Teilnehmeridentitätsmodul (SIM-) kann aktiv sein

Nachteile existierender Verfahren, die eine serielle Verwendung von Paging/ Kurznachrichten Zentralen zur Zwischenspeicherung der Information verwenden, resultieren aus der Unsicherheit über den Zustand der Endgeräte (ausgeschaltet, funk-technisch nicht erreichbar, besetzt). Hieraus ergibt sich:
- Falsche Abrechnung im Falle der Vergebührung von erfolgsabhängiger Zustellung
- Falsche Benachrichtigung des Senders über Zustellung!
- Verzögerte Zustellung

### Beschreibung der Erfindung

Die Aufgabe der Erfindung ist es daher, ein Verfahren anzugeben, das eine eindeutige optimierte Steuerung der Zustellung von Nachrichten in einem Telekommunikationsnetz ermöglicht.

Diese Aufgabe wird durch ein Verfahren bzw. eine Vorrichtung gemäß den Merkmalen der entsprechenden unabhängigen Patentansprüche gelöst.

Bevorzugte Ausgestaltungen und weitere vorteilhafte Merkmale der Erfindung ergeben sich aus den abhängigen Patentansprüchen.

Erfindungsgemäß werden die dem Endgerät bzw. dem angeschlossenen Identifikations-Chip zugeordneten Daten ganz oder teilweise synchron oder zeitnah weiteren, diesem Teilnehmer zugeordneten Endgeräten bzw. dem daran angeschlossenen Identifikations-Chip (z.B. GSM SIM, UMTS USIM)) übermittelt. Damit ist es möglich, dass mehreren Endgeräten, zum Beispiel Haupt- und Nebengeräten eines Teilnehmers, in einer Datenbank, die entweder in einer zentralen SS7 Routing Funktion (Paging-Steuerungssystem) oder in einem ausgelagerten System, vorzugsweise einem neuen Netzelement in Form eines sogenannten Signalling Elements (Signalisierungselement) eingerichtet wird, eine gemeinsame Paging Rufnummer zugewiesen werden kann. Die gemeinsame Paging Rufnummer wird für mindestens eine Anwendung pro Endgeräte (z.B. MMS via Indikation, email via Indikation, Lokation, etc.) zugewiesen, das heißt jedem Endgerät wird vorzugsweise-eine Anwendung zugeordnet.

Dem Teilnehmer ist es somit möglich dynamisch/ administrativ ein spezifisches Endgerät als Paging Endgerät für jeweils eine bestimmte Anwendung (MMS, SMS, email, etc.) auszuweisen. Die Nummer des Endgerätes wird netz-intern als Paging Rufnummer bezeichnet und ist dem Teilnehmer nicht bekannt und nicht zugänglich.

Wird von einer Paging-/Kurznachrichten-Zentrale eine Abfrage zur Zustellung einer Nachricht unter der für alle Endgeräte des Teilnehmer einheitlichen Rufnummer gestartet, so übersetzt das Paging-Steuerungssystem bzw. die ausgelagerte Routingfunktion des Netzes dynamisch in Echt-Zeit die einheitliche Rufnummer in die betreffende Paging Rufnummer des Endgeräts, wobei die Paging Rufnummer für unterschiedliche Netzfunktionen/Anwendungen (MMS, SMS, email, etc.) anders sein kann.

Die zentrale SS7 Routingfunktion wird zur Verkehrsweiterleitung, Lastverteilung und de-multiplexing anhand von Operationscodes oder Rufnummern benutzt. Vorzugsweise erfolgt die Zuordnung von einheitlicher Rufnummer zur Paging Rufnummer dynamisch,aus den assoziierten. Routingdatenbank (en) in der (ausgelagerten) Routingfunktion, die durch ein zusätzliches Signalling Element, d.h. einem um diese Funktionalität erweiterten Signalling Element gebildet wird. Bei dem speziellen Signalling Element handelt es sich um ein neues System zum Daten gesteuerten Umleiten von SMS/Paging Indikationen. Dadurch kann die dynamische Datenhaltung auf das Signalling Element zentriert werden, um die Verwaltung zu vereinfachen. Es ist dadurch möglich, Anwendungen, die das Paging nutzen, jeweils pro Anwendung ein eigenes Paging Endgerät zuzuordnen.
In einer vorteilhaften Ausgestaltung der Erfindung resultiert eine Änderungen des vom Teilnehmer festgelegten Paging Endgerätes in der Signalisierung einer fingierten erfolgreichen Zustellung, um alle ausstehenden, wartenden Paging Mitteilungen schnellstmöglich auf das neue Paging Endgerät zu forcieren und den Pagingvorgang für ausstehende Mitteilungen zeitnah z wiederholen.

Der Pagingvorgang erfolgt mit Zustellung eines oder mehrerer ässoziierter Kurznachrichtentexte von der Pagingzentrale ausgelöst zum designierten Paging Endgerät. Weiterhin kann die Abholung eines Nachrichtentextes mit Bildinformation (Email, MMS) durch Zustellung'der Nachricht auf das Teilnehmer anwendungsspezifische dedizierte Paging Endgerät ausgelöst werden.

Soll eine Zustellung einer assoziierten Nachricht nicht an die jeweilige Paging Rufnummer /designierte Endgerät erfolgen, z.B. für'spezielle Anwendungen einer Mobilfunkkarte wie z.B. Telemetrie oder Upgrade der Mobilfunk spezifischen Anwendungen auf der SIM Karte / Endgerät spezifischen Anwendungen (sogenanntes OTA-Update), muss die normale Versendung verwendet werden. Dies wird durch die Verwendung einer speziellen Funktion (Whitelisting Funktion) mit einer assoziierten Datenbank entweder in der SS7 Routing Funktion oder in der ausgelagerten Routingfunktion erreicht. Als Sonderfälle und Optionen sind hierbei als weitere vorteilhafte Ausgestaltung der Erfindung zu betrachten:
1.) wird anstatt einer einheitlichen Rufnummer vom Sender eine interne Netznummer verwendet, so wird der Sender in der ausgelagerten Routingfunktion blockiert.
2.) wird anstatt der einheitlichen Rufnummer vom Sender eine Schattenrufnummer ( Netzinterne öffentlich bekannte Rufnummer; Verwendung nur für das Senden/Empfangen von SMS) verwendet kann diese, abhängig von den Routing Daten ausgelagerten Routingfunktion, als importierte einheitliche Rufnummer für eine Anwendung behandelt werden. Beispielsweise'würde im Fall von eingebauten Autokarten das vom Netzbetreiber, und optional vom Kunden, vorgegebene Routing "Zustellung auf "Schattenrufnummer" Verwendung finden.

Wesentliche Vorteile der Erfindung sind:
- Nur eine einzige Nummer für mehrere Geräte notwendig
- Korrekte Abrechnung im Falle der Vergebührung von erfolgsabhängiger Zustellung
- Korrekte Benachrichtigungen der originären Partei (Absender) über erfolgreiche Zustellung.
- Zusendung immer an korrekte Paging Nummer nie "Schatten" Nummern
- Optimale Ausnutzung von Netzressourcen
- Optimale Erreichbarkeit für Paging
- Transparente Übernahme von Teilnehmernummern aus den existierenden Verfahren zur Unterstützung von mehreren Rufnummern
- Auswahlmöglichkeit des jeweilig aktiven Paging-Gerätes

wird als Routingfunktion das spezielle, ausgelagerte Signalling Element verwendet, ergeben sich weitere Vorteile des erfindungsgemäßen Verfahrens wie z.B.:
- Keine Herstellerbindung, d.h. kann in jedem GSM Netzwerk eingesetzt werden basierend auf vorhandene Routing Funktionen
- Existierende Signalisierungsnetze können mit minimalen existierenden spezifischen Anpässungen genutzt werden
- Sind von dynamischen Updates nur eine nach gelagerte Funktion (Untergruppe) betroffen. D.h. das Gesamtrisiko für das Netz im Falle von Problemen wird geringer.
- Segmentierung und implizit Ressourcenreservierung des Verkehrs

### Geltungsbereich der Erfindung:

Das Verfahren unterstützt öffentliche Mobilfunknetze (z.B. gemäß GSM Standard).

### Technische Basis der Erfindung:

Das Verfahren nutzt Technologie und Vermittlungsprotokolle gemäß internationaler Telekommunikationsstandards wie GSM/UMTS/SS7, hierbei insbesondere gemäß der GSM CAMEL, MAP und SMS Standards. Die Dienstlogik des Verfahrens basiert auf einem zentralen Dienstknoten und einer Dienstdatenbänk, die mit den Vermittlungen und Mobilitäts-/Profil-Datenbanken der Teilnehmer des mobilen Telekommunikationsnetzes kommuniziert und diese steuert.
Eine typische Umsetzung einer solchen Basis bilden Routing Funktionen im SS7 Netzwerk oder IN (Intelligent Networks). Für SS7 Netzwerk gilt Technologie gemäß ITU Q7xx SS7 Serie und speziell Protokoll Nutzlast gemäß 3GPP MAP 29.002 im Zusammenspiel mit GSM MSC und GSM HLR.
Für IN (Intelligent Networks) gilt Technologie gemäß ITU Ql2xx Serie (siehe auch ETSI CORE INAP Protokoll gemäß ETS 300 374, ETSI GSM CAMEL Protokoll 03.78) im Zusammenspiel mit GSM MSC und GSM HLR

Weitere vorteilhafte Merkmale der Erfindung sind nachfolgend genannt:
a) Der Teilnehmer eines öffentlichen Mobilfunknetzes kann mittels eines Endgerätes und geläufiger Funktionen die typischerweise einem Endgerät (bzw. dem daran angeschlossenen Identifikations-Chip (z.B. GSM SIM, UMTS USIM)) zugeordneten Leistungsmerkmale seines öffentlichen Netzes in einer Weise aktivieren, das sich diese Änderung auch synchron auf die im Netz hinterlegten Leistungsmerkmale von anderen ihm zugeordneten Endgeräten (bzw. dem daran angeschlossenen Identifikations-chip) auswirkt, indem das Profil des Endgerätes beim Pägingvorgang abgefragt wird und für die Selektion des aktiven Paging Endgerätes im Rahmen des Paging zu einem oder mehreren der verknüpften Endgeräte angewendet wird.
b) Optimierte Steuerung der Zustellung eines Paging Versuchs durch Veränderung der Abfrage in Echtzeit.
c) Die benötigten Netzressourcen (Routing, Speicherung, Belegungsdauer) im Pagingversuch auf ein oder mehrere Endgeräte eines Nutzers werden minimiert, indem von der Steuerung, mit einer dazu benötigten Ressourcenbelegung, intelligente Eingriffe in die assoziierten Abfragen vorgenommen werden.
d) Existierende Services eines öffentlichen Mobilfunknetzes und dritter Anbieter für die es nötig ist, eine Zustellung auf ein bestimmtes, Gerät durchzuführen, können unverändert benutzt werden durch Limitierung des Verfahrens auf eine Untermenge aller möglichen Paging Ziele durch Definition von Ausnahme.
e) Das Verfahren ermöglicht die erfolgreiche Durchführung des Paging und assoziierter, Kurznachrichten an die originäre'Partei zu reflektieren, d.h ermöglicht die korrekte Abrechnung von erfolgsabhängiger Vergebührung.
f) Verwendung der Umwertung auf designiertes Paging Endgerät für unterschiedliche Endgeräte für unterschiedliche Anwendungen, d.h. z.B. SMS Zustellung und MMS Indikation über WAP Push auf unterschiedliches Paging Endgerät
g) Anwendung des Verfahrens für Teilnehmer zur Umleitung des Paging auf ein anderes Ziel/Endgerät oder anderes Ziel nur für spezifische Anwendungsfunktion
h) Whitelisting im ausgelagerten Signalling Element ermöglicht die Unterstützung dieser Funktion für Netze die nur Whitelisting anhand von SS7 Translation Type anbieten, das nicht von jedem Gatewayexchange A aufgesetzt werden kann.
i) Auslagern der Funktion in ein dediziertes Netzelement, um Adaption an existierende Netze zu erreichen
j) Umleitung alles Verkehr bestimmter Operationscodes (kleinere Netze) oder einer Verkehrsteilmenge anhand der möglichen Rufnummern (Netze > 10 Mio. Teilnehmer) zur ECHT-ZEIT Bearbeitung in einem dedizierten Netzelement
k) Rückleitung alles Verkehrs aus dem ausgelagerten Signalling Element mit konfigurierbaren Einstellungen um existierende Netzfunktionen durchzuführen; z.B. Load Balancing, HLR Routing, Mobile Number Portability.
l) Der Zuordnung eines Terminals aus einer Gruppe von Terminals erreichbar unter der selben Nummer für eine Applikation
m) Fingierte erfolgreiche Auslieferung bei Änderung des Paging Endgerätes/Applikation um schnellstmöglich auf das neue Paging Endgerät Auslieferung zu forcieren und den Pagingvorgang zeitnah zu wiederholen
n) Nutzung und Kombination obiger Verfahren zur Optimierung von Metzressourcen und kundenrelevantem.Systemverhalten für die Durchführung von über einen initiierten Pagingversuch zu de einem Nutzer zugeordneten Paging-Endgerät.

Fig. 1 verdeutlicht an einem Beispiel den Ablauf des Verfahrens im Detail.

Figur 2 beschreibt den Verfahrensablauf bei einer Änderung des vom Teilnehmer festgelegten Paging Endgeräts/Applikation.

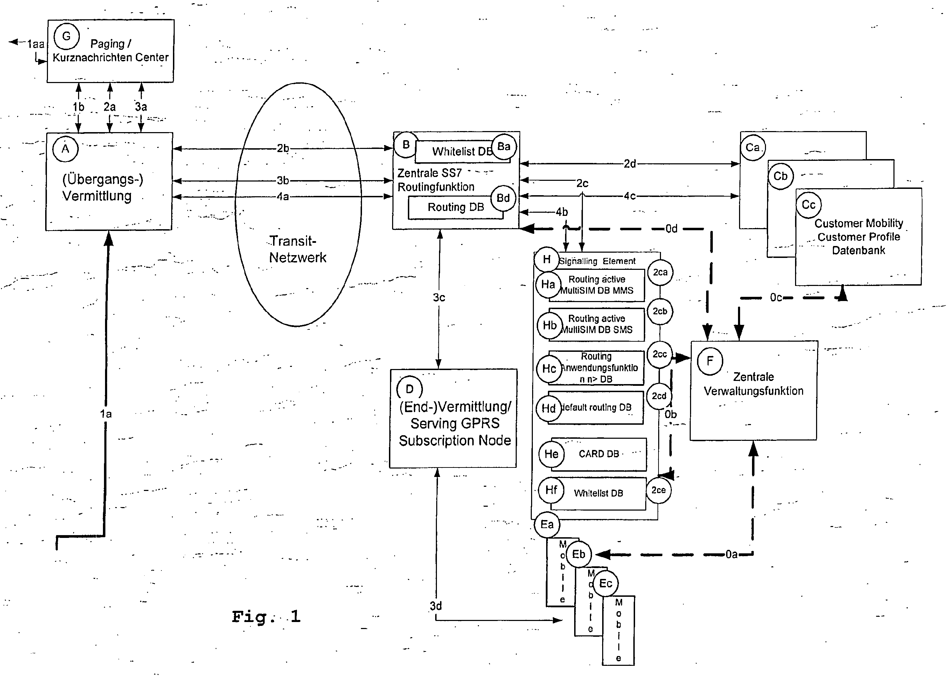

Zunächst werden die in Fig. 1 genutzten'Netzelemente beschrieben:
A) Vermittlungseinrichtung des öffentlichen Netzes (z.B. GSM MSC)
B) intelligente SS7 Routingsteuerung des öffentlichen Netzes mit integrierter oder abgesetzter Datenbank Ba), Bb) zur Steuerung der Logik (Whitelisting-Daten) und Teilnehmerdaten (Routingdaten) (z.B. IN SCP/SMP oder SS7 STP)
Ca/b/c) Mobilitäts-/Profil-Datenbanken des öffentlichen Netzes mit, Aufeizthaltsinformationen und Leistungsmerkmalprofilen der Mobilfunkteilnehmer (z.B. GSM HLR)
D) Vermittlungseinrichtüng des öffentlichen Netzes (z.B. GSM MSC oder GSM SGSN)
Ea)/Eb)/Ec) mobile Endgeräte mit feiner einzigen Teilnehmers MSISDN, wobei jeweils einer Anwendung spezifisch ein Endgerät des Teilnehmers zugewiesen ist, z.B. Endgerät Ea für MMS.
   Verkehr, Endgerät Eb für SMS, etc.
F) Zentrale Verwaltungsfunktion (z.B. GSM SCP oder Webserver). Teilnehmer kann auf die Verwaltungsfunktion zugreifen und seine Einstellungen und Endgerätezuweisungen ändern.
G) Paging / Kurznachrichten Zentrale (z.B. GSM SMSC)
H) Ausgelagerte Routing Funktion, Signalling Element mit
   Ha), Hb), Hc), Hd), He), Hf): ausgelagerte Datenbanken für das Routing pro Anwendung (Endgerät). Ferner Datenbank für Whitelist, verwendete Indentifikations-Karten, etc.

### Beschreibung des in Fig. 1 dargestellten Ablaufes des Verfahrens:

0a/b/c) Dynamische Einstellung des Teilnehmerprofils, insbesondere des gewünschten Pagingverhaltens, durch den Teilnehmer am Endgerät über eine zentrale Verwaltungsfunktion F. Die vom Teilnehmer gemachten Einstellungen werden in die zentrale Routingdatenbank Bd, die Mobilitäts-/Profil-Datenbanken Ca/b/c) und in die ausgelagerten Datenbanken Ha/b/c/d/e übernommen. Der Teilnehmer hat mehrere Endgeräte und kann hier angeben, welche Anwendung, das heißt welcher Kommunikationsdienst auf welches Endgerät geleitet werden soll.

0d) Einmalig durch Serviceaktivierung / Servicelöschung anhand von Rufnummernlisten in die zentrale Routingdatenbank Bd oder anhand von Operationscodes in die zentrale Routingdatenbank Bd und abhängig von der Konfiguration des Netzes die Einrichtung der Whitelisting DB Hf/Ba

1a/aa/b) eingehende Kurznachricht auf die einheitliche Nummer des Teilnehmers in das Paging / Kurznachrichten Center G.

2a/b/c/d) Ermittlung des Teilnehmeraufenthalts und Teilnehmerprofils in der Mobilitäts-/Profil-Datenbank Ca/b/c. Übersetzung der jeweilig gesuchten Nummer in der Zentralen SS7 Routing Funktion B von einheitlicher Rufnummer auf endgerätespezifische Paging Rufnummer, oder alternativ Weiterleitung der Anfrage von der Mobilitäts-/Profil-Datenbank Ca/b/c, anhand eines Operationscodes oder anhand der Routing DB Bd (einheitliche Rufnummer und Operationscodes) an das Signalling Element.

2 ca/cb/cd) Übersetzung der jeweilig gesuchten Nummer von der einheitlichen Rufnummer auf Paging Rufnummer pro Anwendung im Signalling Element H entsprechend anhand der Adresse des sendenden Netzelementes A und Datenbank Ha/Hb/Hc/Hd/He.

### 3) Auslieferung der SMS zur entsprechenden Paging Rufnummer.

4a/b/c) Lieferstatuseintrag in den Mobilitäts-/Profil-Datenbanken Ca/b/c. Übersetzung der jeweilig gesuchten Nummer in der Zentralen Routing Funktion von einheitlicher Rufnummer auf Paging Rufnummer, oder, Übersetzung der jeweilig gesuchten Nummer:im Signalling Element von einheitlicher Rufnummer auf Paging Rufnummer der Anwendung; analog zu Schritt 2ca/cb/cd.

Bei jeder Anfrage der Zentralen SS7 Routing Funktion B wird die Whitelisting Funktion mit Whitelisting Datenbank Ba durchlaufen und geprüft ob keine Übersetzung der einheitlichen Rufnummer erfolgen darf. Im Falle 4a/b/c, 2a/b/c ist die Whitelist DB mit Information zu besetzen damit der normale Ablauf durchgeführt wird, d.h. keine Umsetzung von einheitlicher Rufnummer auf Paging Rufnummer erfolgt.

In gleicher Weise wird bei jeder Anfrage des Signalling Element H die Whitelisting Funktion 2ce mit Whitelisting Datenbank Hf durchlaufen und geprüft, ob keine Übersetzung der einheitlichen Rufnummer erfolgen darf. Im Falle 4a/b/c , 2a/b/c ist die Whitelist DB mit Information zu besetzen damit der normale Ablauf durchgeführt wird, d.h. keine Umsetzung von einheitlicher Rufnummer auf Paging Rufnummer erfolgt. Nach Durchführung der Funktionen 2 ca/cb/cd) und analog zu Schritt 4 wird der Verkehr zur Weiterverarbeitung mit einem konfigurierbaren SS7 Translation Typ wieder in das Netze eingebracht um Zirkelrouting'zu vermeiden. Weiterhin werden dann in der zentralen SS7 Routing Funktion Netzfunktionen wie z.B. MNP ausgerührt, wobei der konfigurierbare SS7 Translation Typ als Indikation der durchzuführenden Funktionen in der Zentralen SS7 Routing Funktion B dient.

Nachfolgende Tabelle 1 bietet ein Beispiel für die Ermittlung eines geeigneten Verhaltens der Whitelist Funktion im Netzelement B und/oder Netzelement H:

**Tabelle 1**

| Originärer Sender der Abfrage (A-Party) | Adresse anfragendes Netzelement G- | Reaktion nach Überprüfung |
|---|---|---|
| In Whitelist DB Ba | Kein Eintrag , Whitelist DB Ba | Normale Zustellung |
| Kein Eintrag in Whitelist DB Ba | In Whitelist DB Ba | Normale Zustellung |
| In Whitelist DB Ba | In Whitelist DB-Ba | Normale Zustellung |
| Kein Eintrag Whitelist DB Ba | Kein Eintrag Whitelist DB Ba | Prüfung ob einheitliche Rufnummer. Wenn ja, dann Übersetzung der einheitlichen Rufnummer zur Paging Rufnummer |

Nur wenn weder in Bezug auf den Sender noch der Adresse des anfragenden Netzelements kein Eintrag in der Whitelist DB Ba vorhanden ist, wird eine Umsetzung der einheitlichen Rufnummer auf die Paging Rufnummer durchgeführt, sofern eine einheitliche Rufnummer erkannt wurde.

Nachfolgende Tabelle 2 bietet ein Beispiel für die Ermittlung eines geeigneten Verhaltens der Routing Funktion im Netzelement H für die Umleitung allen Paging Verkehrs zur Ermittlung des Teilnehmeraufenthalts:

**Tabelle 2**

| **Aktives Ziel (B-Party)** | **Eintrag in CARD DB He** | **Adresse anfragendes Netz-element G** | **Resultat** |
|---|---|---|---|
| Routingeintrag SMS/DB Ha | Populierte Nummer | Kein bekanntes Element | Umwertung SMS Endgerät 2ca |
| Routingeintrag MMS DB Hb | Populierte Nummer | MMS Netzelement | Umwertung MMS Endgerät 2cb |
| Routingeintrag <Anwendungs-funktion n> DB Hc | Populierte Nummer | <Anwendungs-funktion n> Netzelement | Umwertung <Anwendungs-funktion n> Endgerät 2cc |
| Default routing DB Hd | Keine, populierte Nummer | Nicht relevant | Keine Umwertung, 2cd d.h. Default Routing, |

Nachfolgende Tabelle 3 bietet ein Beispiel für die Ermittlung eines geeigneten Verhaltens der Routing Funktion im Netzelement H für die Umleitung der Teilmenge der Teilnehmer mit multiplen Karten :

**Tabelle 3**

| **Aktives Ziel (B-Party)** | **Adresse anfragendes Netzelement** | **Resultat** |
|---|---|---|
| Routingeintrag.SMS DB Ha | Kein bekanntes Netzelement | Umwertung SMS Endgerät 2ca |
| Routingeintrag MMS DB Hb | MMS Netzelement | Umwertung MMS Endgerät 2cb |
| Routingeintrag <Anwendungsfunktion n> DB Hc | <Anwendungsfunktion n> Netzelement | Umwertung <Anwendungsfunktion n> Endgerät 2cc |

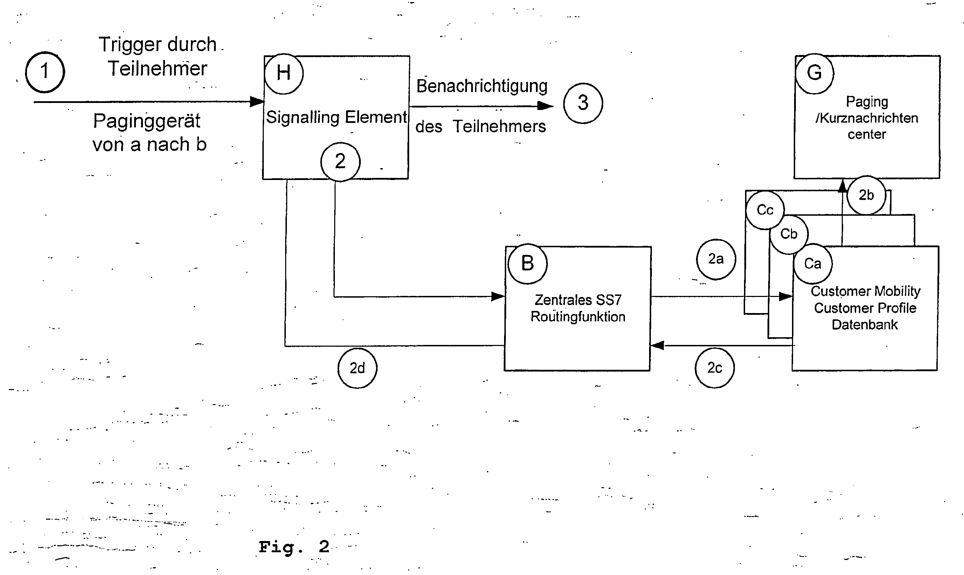

Figur 2 zeigt die Verfahrensweise bei einer Änderungen des vom Teilnehmer festgelegten Paging Endgerätes/ Applikation.

Wird vom Teilnehmer ein bestimmter Trigger (1) empfangen, das Profil für die entsprechende Paging Applikation/Endgerät zu, ändern (Trigger z.B. via USSD, SMS, http etc.), werden die Daten im Signalling Element H in den entsprechenden DB geändert.
Parallel dazu wird für die zu ersetzende Paging Applikation/Endgerät eine erfolgreiche Zustellung (2a/b) an die Mobilitäts-/Profil-Datenbanken Ca/b/c signalisiert. In Figur 2 die Mobilität-/Profil-Datenbank Ca, da ein Änderungswunsch des Teilnehmers von b auf a im Beispiel aufgezeigt wird.
Die entsprechende Mobilität-/Profil-Datenbank forciert (2b) den Start eines erneute Auslieferungsversuches, d.h. an alle in der Mobilitäts-/Profil-Datenbank als wartend verzeichneten Paging/ Kurznachrichten Zentrale (G) mit anstehenden, wartenden. Nachrichten. Die Auslieferung von Paging / Kurznachrichten von der Zentrale (G) an das Paging Applikation/ Endgerät des Teilnehmers wird an durch die geänderten Einstellung im Signalling Element H auf das neue entsprechende Paging Applikation/Endgerät des Teilnehmers gelenkt.

Parallel dazu wird der Teilnehmer von der Ausführung seiner Änderung (3) benachrichtigt.

## Patentansprüche

1. Verfahren zur Steuerung der zustellung von Nachrichten in einem Telekommunikationsnetz, insbesondere einem Mobilkommunikationsnetz, mit Daten, die einem Teilnehmerverhältnis und einem Endgerät oder dem daran angeschlossenen Identifikations-Chip zugeordnet sind, wobei diese zugeordneten Daten ganz oder teilweise synchron oder zeitnah weiteren diesem Teilnehmer zugeordneten Endgeräten oder dem daran angeschlossenen Identifikations-Chip übermittelt werden, **dadurch gekennzeichnet,**
**dass** mehreren Endgeräten (Ea/Eb/Ec) des Teilnehmers in einer Datenbank eine gemeinsame Paging Rufnummer zugewiesen wird, wobei die Datenbank in einer zentralen SS7 Routing Funktion (B), Paging-Steuerungssystem, und/oder in einem ausgelagerten System (H), Signalling Element, eingerichtet wird, dass die Daten mindestens einem Teilnehmerprofil zugeordnet sind, welches durch den Teilnehmer über eine zentrale Verwaltungsfunktion (F) änderbar ist, und dass durch den Teilnehmer mittels eines Endgerätes und geläufige Funktionen die einem Endgerät oder dem daran angeschlossenen Identifikations-Chip zugeordneten Leistungsmerkmale des Telekommunikationsnetzes in einer Weise aktivierbar ist, dass sich diese Änderung synchron auf die im Netz hinterlegten Leistungsmerkmale von anderen, dem Teilnehmer zugeordneten Endgeräten oder dem daran angeschlossenen Identifikations-Chip auswirkt, indem das Profil des Endgerätes beim Pagingvorgang abgefragt wird und für die Selektion des aktiven Paging Endgerätes im Rahmen des Paging zu einem oder mehreren der verknüpften Endgeräte angewendet wird.

2. Verfahren nach Anspruch 1, **dadurch gekennzeichnet, dass** jedem Endgerät (Ea/Eb/Ec) des Teilnehmers wenigstens eine Netzfunktion/Anwendung zugeordnet wird.

3. Verfahren nach einem der Ansprüche 1 oder 2, **dadurch gekennzeichnet, dass** wenn von einer Paging-/Kurznachrichten-Zentrale (G) eine Abfrage zur Zustellung einer Nachricht (1a, 1aa) unter der für alle Endgeräte des Teilnehmer einheitlichen Rufnummer gestartet wird, die zentrale Routingfunktion (B) bzw, die ausgelagerte Routingfunktion (H) des Netzes die einheitliche Rufnummer dynamisch in Echt-Zeit in die dem angesprochenen Endgerät und/oder der Netzfunktion/Anwendung zugeordnete Paging Rufnummer übersetzt, wobei die Paging Rufnummer für unterschiedliche Netzfunktionen/Anwendungen unterschiedlich sein kann.

4. Verfahren nach einem der Ansprüche 1 bis 3, **dadurch** gekenntzeichnet, dass bei einer eingehenden Nachricht (1a; 1aa) eine Ermittlung des Teilnehmeraufenthalts und Teilnehmerprofils in Mobilitäts-/Profil-Datenbanken (Ca/Cb/Cc) durchgeführt wird, und dass eine Übersetzung der jeweilig gesuchten Nummer in der Zentralen SS7 Routing Funktion (B) von der einheitlichen Rufnummer auf endgerätespezifische Paging Rufnummer erfolgt, und dass eine Auslieferung der Nachricht zur entsprechenden Paging Rufnummer erfolgt.

5. Verfahren nach einem der Ansprüche 1 bis 3, **dadurch gekennzeichnet, dass** bei einer eingehenden Nachricht eine Ermittlung des Teilnehmeraufenthalts und Teilnehmerprofils in Mobilitäts-/Profil-Datenbanken (Ca/Cb/Cc) durchgeführt wird, und dass eine Weiterleitung der Anfrage von der Mobilitäts-/Profil-Datenbank, anhand eines Operationscodes oder anhand einer Routing Datenbank (DB Bd) an das Signalling Element (H) erfolgt, dass im Signalling Element (H) eine Übersetzung der jeweilig gesuchten Nummer von der einheitlichen Rufnummer auf eine Paging Rufnummer pro Anwendung entsprechend anhand der Adresse eines sendenden Netzelementes (A) und Datenbanken (Ha/Hb/Hc/Hd/He) durchgeführt wird, und dass eine Auslieferung der Nachricht zur entsprechenden Paging Rufnummer erfolgt.

6. Verfahren nach einem der vorhergehenden Ansprüche, **dadurch gekennzeichnet, dass** ein Lieferstatuseintrag in Mobilitäts-/Profil-Datenbanken (Ca/Cb/Cc) in Verbindung mit der Paging Rufnummer erfolgt.

7. Verfahren nach einem der vorhergehenden Ansprüche, **dadurch gekennzeichnet, dass** die vom Teilnehmer gemachten Einstellungen in eine zentrale Routingdatenbank (Bd), in Mobilitäts-/Profil-Datenbanken (Ca/Cb/Cc) und in ausgelagerte Datenbanken (Ha/Hb/Hc/Hd/He) übernommen werden.

8. Verfahren nach einem der vorhergehenden Ansprüche, **dadurch gekennzeichnet, dass** einmalig zur Aktivierung / Deaktivierung des Verfahrens durch Einschreiben von Rufnummernlisten in die zentrale Routingdatenbank (Bd) oder Einschreiben von Operationscodes in die zentrale Routingdatenbank (Bd) und abhängig von der Konfiguration des Netzes Whitelisting Datenbanken (DB Hf/Ba) eingerichtet werden.

9. Verfahren nach einem der vorhergehenden Ansprüche, **dadurch gekennzeichnet, dass** bei jeder Anfrage der Zentralen SS7 Routing Funktion (B) eine Whitelisting Funktion mit Whitelisting Datenbank (Ba) durchlaufen und geprüft wird, ob keine Übersetzung der einheitlichen Rufnummer in die Paging Rufnummer erfolgen darf.

10. Verfahren nach einem der vorhergehenden Ansprüche, **dadurch gekennzeichnet, dass** bei jeder Anfrage des Signalling Elements (H) eine Whitelisting Funktion (2ce) mit Whitelisting Datenbank (Hf) durchlaufen und geprüft wird, ob keine Übersetzung der einheitlichen Rufnummer in die Paging Rufnummer erfolgen darf.

11. Verfahren nach einem der vorhergehenden Ansprüche, **dadurch gekennzeichnet, dass** Änderungen des vom Teilnehmer festgelegten Paging Endgerätes in einer Signalisierung einer fingierten erfolgreichen Zustellung resultiert, so das alle ausstehenden, wartenden Paging Mitteilungen schnellstmöglich auf das neue Paging Endgerät forciert, und der Pagingvorgang für ausstehende Mitteilungen zeitnah wiederholt wird.

12. Anordnung von Systemkomponenten eines Telekommunikationsnetzes zur Durchführung des Verfahrens gemäß den Patentansprüchen 1 bis 11, **dadurch gekennzeichnet, dass** sie Datenbanken und Datenverarbeitungseinheiten umfasst, die derart ausgestaltet sind, dass eine Verteilung von einzelnen Teilnehmern zugeordneten Leistungsmerkmalsdaten durchführbar ist, wobei sie eine vom Telekommunikationsnetz ausgelagerte Routingfunktion in Form eines Signalling Elements (H) umfasst, das Signalling Element (H) mit einer zentralen Routingfunktion (B) verbunden ist, und die Datenbanken im Signalling Element (H) und/oder der zentralen Routingfunktion (B) angeordnet sind.

## Claims

1. Method for controlling the delivery of messages in a telecommunications network, in particular in a mobile communications network, containing data assigned to a subscriber relationship and a terminal device or the identification chip connected thereto, wherein these assigned data are transmitted in whole or in part synchronously or with little delay to other terminal devices associated with this subscriber or to the identification chip connected thereto, **characterised in that** in a database a common paging call number is allocated to a plurality of terminal devices (Ea/Eb/Ec) of the subscriber, wherein the database is set up in a central SS7 routing function (B), paging control system and/or in an outhoused system (H) signalling element, that the data are assigned to at least one subscriber profile which is amendable by the subscriber via a central administration function (F) and that through the subscriber by means of a terminal device and commonly available functions the performance characteristics of the telecommunications network assigned to a terminal device or the identification chip connected thereto can be activated in a fashion that this amendment acts synchronously on the performance characteristics stored in the network of other terminal devices assigned to the subscriber or to the identification chip connected thereto, **in that** the profile of the terminal device is interrogated in the paging operation and in the course of paging to one or more of the linked terminal device is used for the selection of the active paging terminal device.

2. Method according to claim 1, **characterised in that** at least one network function/application is assigned to each terminal device (Ea/Eb/Ec) of the subscriber.

3. Method according to one of claims 1 or 2, **characterised in that** when an enquiry from a paging/short message control centre (G) for delivery of a message (1a, 1aa) under the uniform call number for all terminal devices of the subscriber is launched the central routing function (B) or the outhoused routing function (H) of the network translates the uniform call number dynamically in real time into the paging call number assigned to the addressed terminal device and/or the network function/application, wherein the paging call number may be different for different network functions/applications.

4. Method according to any of claims 1 to 3, **characterised in that** in the event of an incoming message (1a, 1aa) a determination of the subscriber's whereabouts and subscriber profile is carried out in mobility/profile databases (Ca/Cb/Cc) and that a translation of the number sought at the time from the uniform call number to the paging call number specific to the terminal devices ensues in the central SS7 routing function (B) and that delivery of the message to the corresponding paging call number ensues.

5. Method according to any of claims 1 to 3, **characterised in that** in the event of an incoming message a determination of the subscriber's whereabouts and subscriber profile is carried out in mobility/profile databases (Ca/Cb/Cc) and that the enquiry is passed on by the mobility/profile database on the basis of an operational code or on the basis of a routing database (DB Bd) to the signalling element (H), that in the signalling element (H) a translation of the number sought at the time from the uniform call number to one paging call number per application is carried out on the basis of the address of a sending network element (A) and databases (Ha/Hb/Hc/Hd/He) and that delivery of the message to the corresponding paging call number ensues.

6. Method according to any of the preceding claims, **characterised in that** a delivery status entry is made in mobility/profile databases (Ca/Cb/Cc) in association with the paging call number.

7. Method according to any of the preceding claims, **characterised in that** the settings made by the subscriber in a central routing database (Bd) are taken up into mobility/profile databases (Ca/Cb/Cc) and into outhoused databases (Ha/Hb/Hc/Hd/He).

8. Method according to any of the preceding claims, **characterised in that** uniquely for activating/deactivating the method by registering call number lists in the central routing database (Bd) or registering operational codes in the central routing database (Bd) and independently of the configuration of the network whitelisting databases (DB Hf/Ba) are set up.

9. Method according'to any of the preceding claims, **characterised in that** in each enquiry to the central SS7 routing function (B) a whitelisting function with whitelisting database (Ba) is run through and checked whether no translation of the uniform call number into the paging call number may ensue.

10. Method according to any of the preceding claims, **characterised in that** in each enquiry to the signalling element (H) a whitelisting function (2ce) with whitelisting database (Hf) is run through and checked whether no translation of the uniform call number into the paging call number may ensue.

11. Method according to any of the preceding claims, **characterised in that** amendments to the paging terminal device laid down by the subscriber results in signalling of a faked successful delivery so that all outstanding waiting paging communications are forced as quickly as possible to the new paging terminal device and the paging operation for outstanding communications is repeated with a short delay.

12. Arrangement of system components of a telecommunications network for carrying out the method according to claims 1 to 11 of the patent, **characterised in that** it comprises databases and data processing units which are designed in such a way that distribution of performance characteristics data assigned to individual subscribers can be carried out, wherein it comprises a routing function in the form of a signalling element (H) outhoused from the telecommunications network, the signalling element (H) is associated with a central routing function (B) and the databases are arranged in the signalling element (H) and/or the central routing function (B).

## Revendications

1. Procédé pour commander la distribution de messages dans un réseau de télécommunication, en particulier dans un réseau de communication mobile, avec des données qui sont associées à un abonnement et à un terminal ou à la puce d'identification liée à celui-ci, ces données associées étant transmises de manière entièrement ou partiellement synchrone ou rapidement à d'autres terminaux associés à l'abonné ou à la puce d'identification associée à ceux-ci,
**caractérisé en ce qu'**un numéro d'appel de radiomessagerie commun est attribué à plusieurs terminaux (Ea/Eb/Ec) de l'abonné, dans une banque de données, la banque de données étant installée dans une fonction de routage SS7 centrale (B), dans un système de commande de radiomessagerie et/ou dans un système délocalisé (H), un élément de signalisation, **en ce que** les données sont associées à au moins un profil d'abonné qui est apte à être modifié par l'abonné par l'intermédiaire d'une fonction de gestion centrale (F), et **en ce que** les caractéristiques de prestation du réseau de télécommunication qui sont associées à un terminal ou à la puce d'identification liée à celui-ci sont aptes à être activées par l'abonné à l'aide d'un terminal ou de fonctions courantes de telle sorte que cette modification agisse de manière synchrone sur les caractéristiques de prestation, stockées dans le réseau, d'autres terminaux associés à l'abonné ou de la puce d'identification liée à ceux-ci, grâce au fait que le profil du terminal est interrogé lors de l'opération de radiomessagerie et est appliqué pour la sélection du terminal de radiomessagerie actif dans le cadre de la radiomessagerie à un ou plusieurs terminaux connectés.

2. Procédé selon la revendication 1, **caractérisé en ce qu'**au moins une fonction de réseau/application est associée à chaque terminal (Ea/Eb/Ec) de l'abonné.

3. Procédé selon la revendication 1 ou 2,
**caractérisé en ce que** lorsqu'un central de radiomessagerie/messages courts (G) démarre une interrogation pour distribuer un message (1a, 1aa) au numéro d'appel unique pour tous les terminaux de l'abonné, la fonction de routage centrale (B) ou la fonction de routage délocalisée (H) du réseau convertit dynamiquement, en temps réel, le numéro d'appel unique en numéro d'appel de radiomessagerie associé au terminal visé et/ou à la fonction de réseau/application, le numéro d'appel de radiomessagerie pouvant être différent pour différentes fonctions de réseau/applications.

4. Procédé selon l'une des revendications 1 à 3, **caractérisé en ce que** lorsqu'un message arrive (1a ; 1aa), la position de l'abonné et le profil d'abonné sont déterminés dans des banques de données de mobilité/de profil (Ca/Cb/Cc), **en ce que** le numéro recherché est converti dans la fonction de routage SS7 centrale (B) pour passer du numéro d'appel unique à un numéro d'appel de radiomessagerie propre au terminal, et **en ce que** le message est distribué au numéro d'appel de radiomessagerie correspondant.

5. Procédé selon l'une des revendications 1 à 3, **caractérisé en ce que** lorsqu'un message arrive, la position de l'abonné et le profil d'abonné sont déterminés dans des banques de données de mobilité/de profil (Ca/Cb/Cc) et **en ce que** la demande est transmise de la banque de données de mobilité/de profil, à l'aide d'un code d'opération ou d'une banque de données de routage (DB Bd), à l'élément de signalisation (H), **en ce que** dans l'élément de signalisation (H), le numéro recherché est converti pour passer du numéro d'appel unique à un numéro d'appel de radiomessagerie, pour chaque application, à l'aide de l'adresse d'un élément de réseau émetteur (A) et de banques de données (Ha/Hb/Hc/Hd/He), et **en ce que** le message est distribué au numéro d'appel de radiomessagerie correspondant.

6. Procédé selon l'une des revendications précédentes, **caractérisé en ce qu'**une inscription d'état de distribution a lieu dans des banques de données de mobilité/de profil (Ca/Cb/Cc), en liaison avec le numéro d'appel de radiomessagerie.

7. Procédé selon l'une des revendications précédentes, **caractérisé en ce que** les réglages faits par l'abonné sont repris dans une banque de données de routage centrale (Bd), dans des banques de données de mobilité/de profil (Ca/Cb/Cc) et dans des banques de données délocalisées (Ha/Hb/Hc/Hd/He).

8. Procédé selon l'une des revendications précédentes, **caractérisé en ce que** des banques de données de liste blanche (DB Hf/Ba) sont installées une fois pour l'activation/la désactivation du procédé grâce à l'enregistrement de listes de numéros d'appel dans la banque de données de routage centrale (Bd) ou à l'enregistrement de codes d'opérations dans ladite banque de donnée de routage centrale (Bd) et en fonction de la configuration du réseau.

9. Procédé selon l'une des revendications précédentes, **caractérisé en ce qu'**à chaque demande de la fonction de routage SS7 centrale (B), une fonction de liste blanche avec une banque de données de liste blanche (Ba) est exécutée et on vérifie si aucune conversion du numéro d'appel unique en numéro d'appel de radiomessagerie ne peut avoir lieu.

10. Procédé selon l'une des revendications précédentes, **caractérisé en ce qu'**à chaque demande de l'élément de signalisation (H), une fonction de liste blanche (2ce) avec une banque de données de liste blanche (Hf) est exécutée et on vérifie si aucune conversion du numéro d'appel unique en numéro d'appel de radiomessagerie ne peut avoir lieu.

11. Procédé selon l'une des revendications précédentes, **caractérisé en ce que** des modifications du terminal de radiomessagerie déterminé par l'abonné se traduisent par une signalisation d'une distribution réussie simulée, de sorte que toutes les notifications de radiomessagerie en attente sont forcées le plus vite possible dans le nouveau terminal de radiomessagerie, et l'opération de radiomessagerie est répétée rapidement pour les notifications en attente.

12. Installation de composants de système d'un réseau de télécommunication pour la mise en oeuvre du procédé selon les revendications 1 à 11, **caractérisée en ce qu'**elle comprend des banques de données et des unités de traitement de données qui sont conçues pour que des données de caractéristiques de prestation associées à des abonnés individuels puissent être réparties, étant précisé qu'elle comprend une fonction de routage délocalisée par rapport au réseau de télécommunication, sous la forme d'un élément de signalisation (H), que cet élément de signalisation (H) est relié à une fonction de routage centrale (B) et que les banques de données sont disposées dans l'élément de signalisation (H) et/ou dans la fonction de routage centrale (B).
